(19) Europäisches Patentamt
European Patent Office
Office européen des brevets

(11) EP 3 719 346 A1

(12) EUROPEAN PATENT APPLICATION
published in accordance with Art. 153(4) EPC

(43) Date of publication:
07.10.2020 Bulletin 2020/41

(51) Int Cl.:
F16F 15/03 (2006.01)     E04H 9/02 (2006.01)
F16F 6/00 (2006.01)

(21) Application number: 18883940.1

(22) Date of filing: 02.11.2018

(86) International application number:
PCT/JP2018/040854

(87) International publication number:
WO 2019/107071 (06.06.2019 Gazette 2019/23)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 29.11.2017 JP 2017228701

(71) Applicant: Nippon Steel Corporation
Tokyo 100-8071 (JP)

(72) Inventors:
• NOGAMI, Hiroshi
Tokyo 100-8071 (JP)

• IMANISHI, Kenji
Tokyo 100-8071 (JP)
• NOGUCHI, Yasutaka
Tokyo 100-8071 (JP)
• MASUI, Ryohsuke
Tokyo 100-8071 (JP)
• SANO,Kumpei
Tokyo 100-8071 (JP)

(74) Representative: Zimmermann & Partner
Patentanwälte mbB
Postfach 330 920
80069 München (DE)

(54) EDDY CURRENT TYPE DAMPER

(57)     An eddy current damper (1) includes a magnet holding member (2), a first permanent magnet (3) having a thickness (HI), a second permanent magnet (4) having a thickness (HI), a conductive member (5), a ball nut (6), a screw shaft (7), and a copper layer (12) having a thickness (H2). The second permanent magnet (4) is adjacent to the first permanent magnets (3) with a gap therebetween in the circumferential direction of the magnet holding member (2), wherein the arrangement of magnet poles is inverted between the second permanent magnet (4) and the first permanent magnet (3). The ball nut (6) is arranged inside the magnet holding member (2) and the conductive member (5), and is fixed to the magnet holding member (2) or the conductive member (5). The copper layer (12) is fixed to the conductive member (5) and is opposed to the first permanent magnet (3) and the second permanent magnet (4) with a gap therebetween. The thickness (H1) and the thickness (H2) satisfy, with respect to a distance (R1) between a central axis of the screw shaft (7) and the center of gravity of the first permanent magnet (3):

$$0.018 \leq H1/R1 \leq 0.060,$$

and

$$0.0013 \leq H2/R1 \leq 0.0065.$$

EP 3 719 346 A1

FIG. 2

**Description**

TECHNICAL FIELD

The present invention relates to an eddy current damper.

BACKGROUND ART

In order to protect buildings against vibration caused by earthquakes and the like, vibration control devices are attached to the buildings. Such a vibration control device converts kinetic energy given to a building into another type of energy (for example, heat energy). In this way, large shaking of the building is suppressed. The vibration control device is, for example, dampers. The type of the damper includes, for example, an oil type and a shear resistance type. In general, oil type and shear resistance type dampers are often used in buildings. An oil damper dampens vibration by utilizing incompressible fluid in a cylinder. A shear resistance type damper dampens vibration by utilizing the shear resistance of viscous fluid.

However, the viscosity of the viscous fluid used in the shear resistance type damper particularly depends on the temperature of the viscous fluid. In other words, the damping force of the shear resistance type damper depends on temperature. Therefore, when the shear resistance type damper is used for a building, it is necessary to select an appropriate viscous fluid in consideration of the use environment. Further, in a damper using a fluid, such as of an oil type or a shear resistance type, the pressure of the fluid may increase due to excessive temperature rise or the like, thereby causing damage to mechanical elements such as a sealing material of cylinder. A damper, the damping force of which is much less dependent on temperature, includes an eddy current damper.

Eddy current dampers are disclosed in, for example, Japanese Patent Publication No. 05-86496 (Patent Literature 1), Japanese Patent Application Publication No. 09-177880 (Patent Literature 2), and Japanese Patent Application Publication No. 2000-320607 (Patent Literature 3).

The eddy current damper of Patent Literature 1 includes a plurality of permanent magnets attached to a main cylinder, a hysteresis material connected to a screw shaft, a ball nut meshing with the screw shaft, and a sub-cylinder connected to the ball nut. The magnetic poles of the plurality of permanent magnets are differently arranged in an alternate manner. The hysteresis material is opposed to the plurality of permanent magnets, and is relatively rotatable. When kinetic energy is applied to the eddy current damper, the sub-cylinder and the ball nut move in the axial direction, and the hysteresis member is rotated by the action of the ball screw. As a result, the kinetic energy is consumed by hysteresis loss. Further, Patent Literature 1 describes that the kinetic energy is consumed by eddy current loss because eddy current is generated in the hysteresis material.

The eddy current damper of Patent Literature 2 includes a conductor rod and a plurality of ring-shaped permanent magnets arrayed in the axial direction of the conductor rod. The conductor rod penetrates through the inside of the plurality of ring-shaped permanent magnets. When the conductor rod moves in the axial direction, the magnetic flux passing through the conductor rod from the plurality of permanent magnets changes, and an eddy current is generated on the surface of the conductor rod. In this way, the conductor rod is subject to a force in a direction opposite to the moving direction. In other words, Patent Literature 2 describes that the conductor rod is subject to a damping force.

The eddy current damper of Patent Literature 3 includes a guide nut that meshes with a screw shaft, a conductive drum attached to the guide nut, a casing provided on the inner peripheral surface side of the drum, and a plurality of permanent magnets which are attached to an outer peripheral surface of the casing, and are opposed to an inner peripheral surface of the drum with a certain gap therebetween. Even if the guide nut and the drum rotate as the screw shaft advances and retreats, the drum inner peripheral surface and the permanent magnet do not graze with each other because they are not in contact with each other. Accordingly, Patent Literature 3 states that the number of times of maintenance is decreased as compared with an oil damper.

CITATION LIST

PATENT LITERATURE

Patent Literature 1: Japanese Patent Publication No. 05-86496
Patent Literature 2: Japanese Patent Application Publication No. 09-177880
Patent Literature 3: Japanese Patent Application Publication No. 2000-320607

## SUMMARY OF INVENTION

### TECHNICAL PROBLEM

However, in the eddy current damper disclosed in Patent Literature 1, the ball nut moves in the axial direction of the screw shaft. In order to ensure such a movable range of the ball nut, the damper is large in size. In the eddy current damper of Patent Literature 2, since the ring-shaped permanent magnets are arrayed in the axial direction, the damper is large in size. In the eddy current damper of Patent Literature 3, since the guide nut is provided outside the drum, it is likely that dust enters between the guide nut and the ball screw. In the eddy current damper disclosed in Patent Literature 3, the guide nut is provided outside the drum, a flange portion of the guide nut is fixed to the drum, and the cylindrical portion of the guide nut extends toward the opposite side of the drum. Therefore, it is necessary to ensure a long distance (stroke distance of the ball screw) between the end on the opposite side of the drum of the cylindrical portion of the guide nut and a fixture fixed to the building so that the size of the eddy current damper tends to increase.

An object of the present invention is to provide an eddy current damper, the size of which can be reduced.

### SOLUTION TO PROBLEM

An eddy current damper of the present embodiment includes a magnet holding member, a first permanent magnet, a second permanent magnet, a conductive member, a ball nut, a screw shaft, and a copper layer. The magnet holding member has a cylindrical shape. The first permanent magnet has a thickness H1 and is fixed to the magnet holding member. The second permanent magnet has a thickness H1, is adjacent to the first permanent magnet with a gap therebetween in the circumferential direction of the magnet holding member, and is fixed to the magnet holding member, wherein the arrangement of magnet poles is inverted between the second permanent magnet and the first permanent magnet. The cylindrical conductive member has conductivity and is opposed to the first permanent magnet and the second permanent magnet with a gap therebetween. The ball nut is arranged inside the magnet holding member and the conductive member, and is fixed to the magnet holding member or the conductive member. The screw shaft is movable in a central axis direction and meshes with the ball nut. The copper layer has a thickness H2, is fixed to the conductive member, and is opposed to the first permanent magnet and the second permanent magnet with a gap therebetween. The thickness H1 and the thickness H2 satisfy, with respect to a distance R1 between the central axis of the screw shaft and a center of gravity of the first permanent magnet:

$$0.018 \leq H1/R1 \leq 0.060, \text{ and}$$
$$0.0013 \leq H2/R1 \leq 0.0065.$$

### ADVANTAGEOUS EFFECTS OF INVENTION

According to the eddy current damper of the present embodiment, it is possible to realize down-sizing.

### BRIEF DESCRIPTION OF DRAWINGS

[FIG. 1] FIG. 1 is a sectional view taken in a plane along an axial direction of the eddy current damper.
[FIG. 2] FIG. 2 is a partially enlarged view of FIG. 1.
[FIG. 3] FIG. 3 is a sectional view taken in a plane perpendicular to the axial direction of the eddy current damper.
[FIG. 4] FIG. 4 is a partially enlarged view of FIG. 3.
[FIG. 5] FIG. 5 is a perspective view showing first permanent magnets and second permanent magnets.
[FIG. 6] FIG. 6 is a schematic diagram showing magnetic circuits of an eddy current damper.
[FIG. 7] FIG. 7 is a diagram showing relationship between average energy absorption rate and thickness of the first permanent magnet.
[FIG. 8] FIG. 8 is a partially enlarged view of FIG. 7.
[FIG. 9] FIG. 9 is a diagram showing relationship between heat input density and the thickness of the first permanent magnet.
[FIG. 10] FIG. 10 is a diagram showing relationship between the thickness of the first permanent magnet and the thickness of a copper layer.
[FIG. 11] FIG. 11 is a perspective view showing first permanent magnets and second permanent magnets in which the magnetic poles are arranged in the circumferential direction.
[FIG. 12] FIG. 12 is a schematic diagram showing magnetic circuits of the eddy current damper of FIG. 11.

[FIG. 13] FIG. 13 is a perspective view showing first permanent magnets and second permanent magnets, which are arranged in a plurality of rows in the axial direction.
[FIG. 14] FIG. 14 is a sectional view taken in a plane along the axial direction of an eddy current damper of a second embodiment.
[FIG. 15] FIG. 15 is a sectional view taken in a plane perpendicular to the axial direction of the eddy current damper of the second embodiment.
[FIG. 16] FIG. 16 is a sectional view taken in a plane along the axial direction of an eddy current damper of a third embodiment.
[FIG. 17] FIG. 17 is a partially enlarged view of FIG. 16.
[FIG. 18] FIG. 18 is a sectional view taken in a plane along the axial direction of an eddy current damper of a fourth embodiment.

DESCRIPTION OF EMBODIMENTS

An eddy current damper of the present embodiment includes a magnet holding member, a first permanent magnet, a second permanent magnet, a conductive member, a ball nut, a screw shaft, and a copper layer. The magnet holding member has a cylindrical shape. The first permanent magnet has a thickness H1 and is fixed to the magnet holding member. The second permanent magnet has a thickness H1, is adjacent to the first permanent magnet with a gap therebetween in the circumferential direction of the magnet holding member, and is fixed to the magnet holding member, wherein the arrangement of magnet poles is inverted between the second permanent magnet and the first permanent magnet. The cylindrical conductive member has conductivity and is opposed to the first permanent magnet and the second permanent magnet with a gap therebetween. The ball nut is arranged inside the magnet holding member and the conductive member, and is fixed to the magnet holding member or the conductive member. The screw shaft is movable in a central axis direction and meshes with the ball nut. The copper layer has a thickness H2, is fixed to the conductive member, and is opposed to the first permanent magnet and the second permanent magnet with a gap therebetween. The thickness H1 and the thickness H2 satisfy, with respect to a distance R1 between the central axis of the screw shaft and a center of gravity of the first permanent magnet:

$$0.018 \leq H1/R1 \leq 0.060,$$

and

$$0.0013 \leq H2/R1 \leq 0.0065.$$

According to the eddy current damper of the present embodiment, the ball nut is arranged inside the conductive member and the magnet holding member. The ball nut is fixed to the magnet holding member or the conductive member. Even if kinetic energy is applied to the eddy current damper due to vibration, etc. causing the screw shaft to move in the central axis direction (hereinafter, simply referred to as axial direction), the ball nut will not move in the axial direction. Therefore, it is not necessary to provide a movable range of the ball nut in the eddy current damper. Therefore, components such as the magnet holding member and the conductive member can be reduced in size. This makes it possible to realize down-sizing of the eddy current damper. In addition, it is possible to realize weight reduction of the eddy current damper. Moreover, since each component has a simple configuration, assembly of the eddy current damper is facilitated. Furthermore, the component cost and manufacturing cost of the eddy current damper are reduced.
The thickness of the first permanent magnet and the second permanent magnet, H1/R1, which is nondimensionalized by the distance R1 between the central axis of the screw shaft and the center of gravity of the first permanent magnet, is within a predetermined range, and is thin. As a result of this, the amount of magnetic flux that reaches the conductive member from the first permanent magnet and the second permanent magnet decreases, and thus heat generation density of the conductive member decreases. That is, excessive temperature rise of the conductive member will be suppressed. On the other hand, as a result of decrease in the amount of magnetic flux that reaches the conductive member, eddy current to be generated will be diminished, and the damping force of the eddy current damper will be decreased. To compensate for this, a copper layer is provided on a face of the conductive member opposed to the first permanent magnet and the second permanent magnet. Since copper has high conductivity, strong eddy current is generated in the copper layer even in a weak magnetic field. Thereby, damping force of the eddy current damper is ensured.

Preferably, the upper limit of the thickness H1 satisfies, with respect to the distance R1:

$$H1/R1 = 0.023 + (0.28 \times H2/R1 - 0.0036)^{0.5},$$

or

$$H1/R1 = -7.7 \times H2/R1 + 0.096,$$

whichever is smaller.

As described below, the present inventors have investigated optimal relationship between the thickness of the permanent magnet and the thickness of the copper layer for allowing the eddy current damper to realize high average energy absorption rate and low heat input density. From the results, they have found an upper limit of the above described thickness of the first permanent magnet and the second permanent magnet, H1/R1. Within this range, the eddy current damper can realize a high average energy absorption rate and a low heat input density. Note that higher average energy absorption rates mean higher performance of the eddy current damper, and lower heat input densities mean lower amount of heat generation of the conductive member.

More preferably, the thickness H1 and the thickness H2 satisfy, with respect to the distance R1:

$$1.8 \times H2/R1 + 0.013 \leq H1/R1 \leq 4.6 \times H2/R1 + 0.016,$$

and

$$0.0026 \leq H2/R1 \leq 0.0065.$$

From the investigation results to be described below, when relationship between the thickness of the first permanent magnet and the second permanent magnet, H1/R1, and the thickness of the copper layer H2/R1 is within the above described range, the eddy current damper can realize higher average energy absorption rate and lower heat input density.

Further preferably, the eddy current damper of the present embodiment includes a distal end side bearing and a root side bearing. The distal end side bearing is attached to the magnet holding member to support the conductive member at a position closer to the distal end side of the screw shaft than the first permanent magnet and the second permanent magnet, or is attached to the conductive member to support the magnet holding member at a position closer to the distal end side of the screw shaft than the first permanent magnet and the second permanent magnet. The root side bearing is attached to the magnet holding member to support the conductive member at a position closer to the root side of the screw shaft than the first permanent magnet and the second permanent magnet, or is attached to the conductive member to support the magnet holding member at a position closer to the root side of the screw shaft than the first permanent magnet and the second permanent magnet.

According to such configuration, two bearings attached to the conductive member or the magnet holding member support the magnet holding member or the conductive member at two points with the permanent magnet being interposed therebetween. For that reason, even if the magnet holding member and the conductive member are relatively rotated, it is likely that a constant gap is maintained between the permanent magnet and the conductive member.

Hereinafter, an eddy current damper of the present embodiment will be described with reference to the drawings.

[First embodiment]

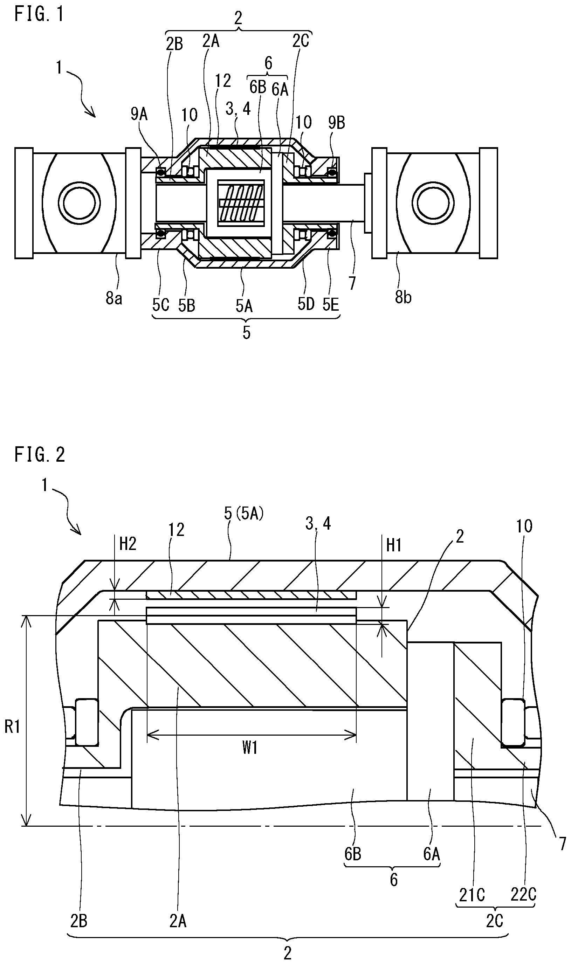

FIG. 1 is a cross-sectional view taken in a plane along the axial direction of the eddy current damper. FIG. 2 is a partially enlarged view of FIG. 1. Referring to FIGS. 1 and 2, an eddy current damper 1 includes a magnet holding member 2, first permanent magnets 3, second permanent magnets 4, a conductive member 5, a ball nut 6, a screw shaft 7, and a copper layer 12.

[Magnet holding member]

The magnet holding member 2 includes a main cylinder 2A, a distal end side sub-cylinder 2B, and a root side sub-cylinder 2C.

The main cylinder 2A has a cylindrical shape with the screw shaft 7 as a central axis. The length of the main cylinder 2A in the axial direction of the screw shaft 7 is larger than the lengths of the first permanent magnet 3 and the second permanent magnet 4 in the axial direction of the screw shaft 7.

The distal end side sub-cylinder 2B extends from the end on the distal end side (the free end side of the screw shaft 7 or the fixture 8a side) of the main cylinder 2A. The distal end side sub-cylinder 2B has a cylindrical shape with the screw shaft 7 as its central axis. The outer diameter of the distal end side sub-cylinder 2B is smaller than the outer diameter of the main cylinder 2A.

Referring to FIG. 2, the root side sub-cylinder 2C is provided on the root side (the fixture 8b side) of the main cylinder 2A with a flange portion 6A of a ball nut being interposed therebetween. The root side sub-cylinder 2C includes a flange fixing portion 21C and a cylindrical support portion 22C. The flange fixing portion 21C has a cylindrical shape with the screw shaft 7 as its central axis, and is fixed to the flange portion 6A of the ball nut. The cylindrical support portion 22C extends from the end of the root side (the fixture 8b side) of the flange fixing portion 21C, and has a cylindrical shape. The outer diameter of the cylindrical support portion is smaller than the outer diameter of the flange fixing portion 21C.

The magnet holding member 2 having such a configuration can accommodate the cylindrical portion 6B of the ball nut and a part of the screw shaft 7 thereinside. The material of the magnet holding member 2 is not particularly limited. However, the material of the magnet holding member 2 is preferably one having a high magnetic permeability, such as steel. The material of the magnet holding member 2 is, for example, a ferromagnetic substance such as carbon steel or cast iron. In this case, the magnet holding member 2 serves as a yoke. In other words, magnetic fluxes from the first permanent magnets 3 and the second permanent magnets 4 are less likely to leak to the outside, and the damping force of the eddy current damper 1 is increased. As will be described later, the magnet holding member 2 is rotatable with respect to the conductive member 5.

[First permanent magnet and second permanent magnet]

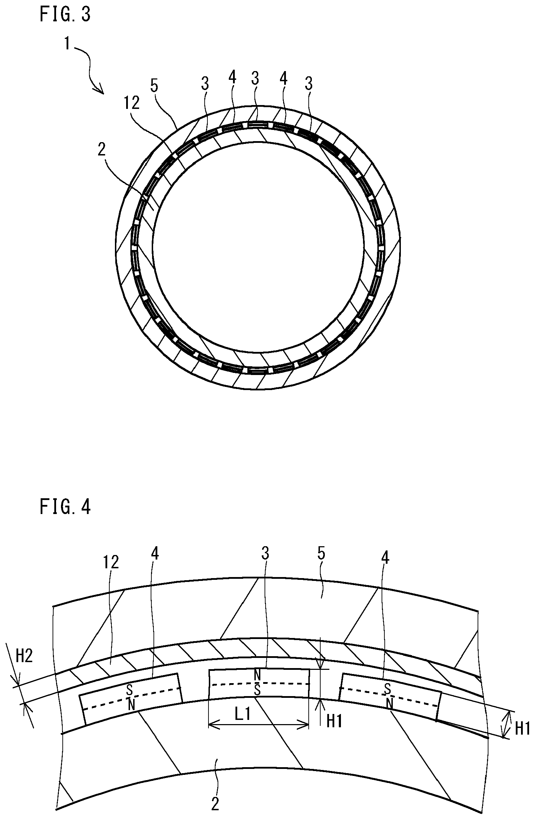

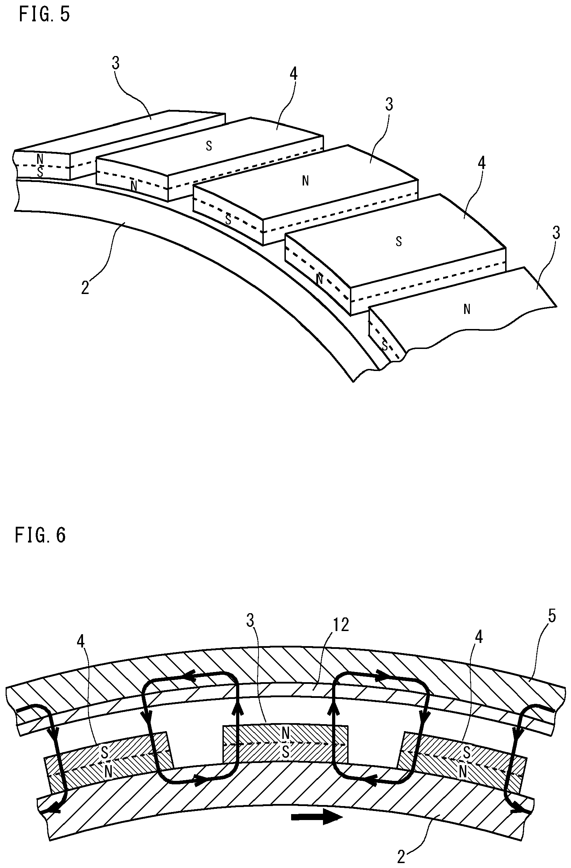

FIG. 3 is a sectional view taken in a plane perpendicular to the axial direction of an eddy current damper. Note that some components such as the screw shaft, etc. are omitted in FIG. 3. The same applies to FIGS. 4 and 5 to be described below. Referring to FIG. 3, when the eddy current damper 1 includes a plurality of first permanent magnets 3 and a plurality of second permanent magnets 4, the plurality of first permanent magnets 3 are attached to the outer peripheral surface of the main cylinder 2A of the magnet holding member 2, and are arrayed along the circumferential direction of the magnet holding member 2. Similarly, the plurality of second permanent magnets 4 are arrayed along the circumferential direction of the magnet holding member 2 around the screw shaft. One second permanent magnet 4 is disposed between adjacent two first permanent magnets 3 with a gap therebetween. In other words, the first permanent magnets 3 and the second permanent magnets 4 are alternately arranged therebetween along the circumferential direction of the magnet holding member 2.

FIG. 4 is a partially enlarged view of FIG. 3. FIG. 5 is a perspective view showing first permanent magnets and second permanent magnets. Referring to FIGS. 4 and 5, the first permanent magnets 3 and the second permanent magnets 4 are fixed to the outer peripheral surface of the magnet holding member 2. The second permanent magnet 4 is adjacent to the first permanent magnet 3 with a gap therebetween in the circumferential direction of the magnet holding member 2.

The magnetic poles of the first permanent magnet 3 and the second permanent magnet 4 are arranged in the radial direction of the magnet holding member 2. The arrangement of the magnetic poles of the second permanent magnet 4 is inverted from the arrangement of the magnetic poles of the first permanent magnet 3. For example, referring to FIGS. 4 and 5, the N poles of first permanent magnets 3 are arranged on the outer side, and the S poles thereof are arranged on the inner side, in the radial direction of the magnet holding member 2. Therefore, the S poles of the first permanent magnets 3 are in contact with the magnet holding member 2. On the other hand, in the radial direction of the magnet holding member 2, the N poles of the second permanent magnets 4 are arranged on the inner side, and the S poles thereof are arranged on the outer side. Therefore, the N poles of the second permanent magnets 4 are in contact with the magnet holding member 2.

The size and characteristics of the second permanent magnet 4 are preferably the same as the size and characteristics of the first permanent magnet 3. Since the thickness of the first permanent magnet 3 is H1, the thickness of the second permanent magnet 4 is H1 as well. The thickness of the first permanent magnet and the second permanent magnet will be described later. The first permanent magnets 3 and the second permanent magnets 4 are fixed to the magnet holding member 2 with an adhesive, for example. Of course, the first permanent magnets 3 and the second permanent magnets 4 may be fixed with screws or the like, without being limited to the adhesive.

[Conductive member]

Referring to FIGS. 1 and 2, the conductive member 5 includes a central cylindrical portion 5A, a distal end side conical portion 5B, a distal end side cylindrical portion 5C, a root side conical portion 5D, and a root side cylindrical portion 5E.

The central cylindrical portion 5A has a cylindrical shape with the screw shaft 7 as its central axis. The inner peripheral surface of the central cylindrical portion 5A is opposed to the first permanent magnets 3 and the second permanent magnets 4 with a gap therebetween. The distance between the inner peripheral surface of the central cylindrical portion 5A and the first permanent magnets 3 (or the second permanent magnets 4) is constant along the axial direction of the screw shaft 7. The length of the central cylindrical portion 5A in the axial direction of the screw shaft 7 is larger than the lengths of the first permanent magnet 3 and the second permanent magnet 4 in the axial direction of the screw shaft 7.

The distal end side conical portion 5B has a conical shape with the screw shaft 7 as its central axis. The distal end side conical portion 5B extends from the end on the distal end side (the free end side of the screw shaft 7 or the fixture 8a side) of the central cylindrical portion 5A, and the outer diameter and inner diameter of the distal end side conical portion 5B become smaller as being closer to the distal end side (the free end side of the screw shaft 7 or the fixture 8a side).

The distal end side cylindrical portion 5C has a cylindrical shape with the screw shaft 7 as its central axis. The distal end side cylindrical portion 5C extends from the end of the distal end side (the free end side of the screw shaft 7 or the fixture 8a side) of the distal end side conical portion 5B. The end on the distal end side of the distal end side cylindrical portion 5C (the free end side of the screw shaft 7 or the fixture 8a side) is fixed to the fixture 8a.

The root side conical portion 5D has a conical shape with the screw shaft 7 as its central axis. The root side conical portion 5D extends from the end on the root side (the fixture 8b side) of the central cylindrical portion 5A, and the outer diameter and inner diameter of the root side conical portion 5D become smaller as moving toward the root side (the fixture 8b side).

The root side cylindrical portion 5E has a cylindrical shape with the screw shaft 7 as its central axis. The root side cylindrical portion 5E extends from the end on the root side (the fixture 8b side) of the root side conical portion 5D. The end on the root side (the fixture 8b side) of the root side cylindrical portion 5E is a free end.

The conductive member 5 having such a configuration can accommodate the magnet holding member 2, the first permanent magnets 3, the second permanent magnets 4, the ball nut 6, a part of the screw shaft 7, and a copper layer 12. That is, the magnet holding member 2 is arranged in a concentric fashion inside the conductive member 5. The inner peripheral surface of the conductive member 5 (inner peripheral surface of the central cylindrical portion 5A) is opposed to the first permanent magnet 3 and the second permanent magnet 4 with a gap therebetween. As will be described later, the conductive member 5 rotates relatively to the magnet holding member 2 in order to generate an eddy current in the conductive member 5. Therefore, a gap is provided between the conductive member 5, and the first permanent magnets 3 and the second permanent magnets 4. The fixture 8a is connected to the conductive member 5. The fixture 8a integral with the conductive member 5 is fixed to a building support surface, or within the building. Therefore, the conductive member 5 is not rotatable around the screw shaft 7.

The conductive member 5 has conductivity. The material of the conductive member 5 is, for example, a ferromagnetic substance such as carbon steel or cast iron. In addition, the material of the conductive member 5 may be a feeble magnetic substance such as ferritic stainless steel or a nonmagnetic substance such as aluminum alloy, austenitic stainless steel, and a copper alloy.

The conductive member 5 rotatably supports the magnet holding member 2. The supporting of the magnet holding member 2 is preferably configured, for example, as follows.

Referring to FIG. 1, the eddy current damper 1 further includes a distal end side bearing 9A and a root side bearing 9B. The distal end side bearing 9A is attached to the inner peripheral surface of the conductive member 5 (distal end side cylindrical portion 5C) at a position closer to the distal end side of the screw shaft 7 (the free end side of the screw shaft 7 or the fixture 8a side) than the first permanent magnets 3 and the second permanent magnets 4, to support the outer peripheral surface of the magnet holding member 2 (the distal end side sub-cylinder 2B). Further, the root side bearing 9B is attached to the inner peripheral surface of the conductive member 5 (the root side cylindrical portion 5E) at a position closer to the root side of the screw shaft 7 (the fixture 8b side) than the first permanent magnets 3 and the second permanent magnets 4, thereby supporting the outer peripheral surface of the magnet holding member 2 (the cylindrical support portion 22C).

With such a configuration, the magnet holding member 2 is supported on both sides of the first permanent magnets 3 and the second permanent magnets 4 in the axial direction of the screw shaft 7. Therefore, even if the magnet holding member 2 is rotated, the gap between the first permanent magnets 3 (second permanent magnet 4) and the conductive member 5 is likely to be kept at a constant distance. If the gap is kept at a constant distance, the braking force due to an eddy current can be stably obtained. Further, if the gap is kept at a constant distance, there is less possibility that the first permanent magnets 3 and the second permanent magnets 4 come into contact with the conductive member 5, and therefore the gap can be further reduced. In that way, as will be described later, the amount of magnetic fluxes from the first permanent magnets 3 and the second permanent magnets 4 passing through the conductive member 5 increases, thus allowing the braking force to further increase, or allowing desired braking force to be exerted even if the number of the permanent magnets is decreased.

A thrust bearing 10 is provided between the magnet holding member 2 and the conductive member 5 in the axial direction of the magnet holding member 2. Note that, of course, the types of the distal end side bearing 9A, the root side bearing 9B, and the thrust bearing 10 are not particularly limited, and may be a ball type, a roller type, a sliding type, or the like.

Note that the central cylindrical portion 5A, the distal end side conical portion 5B, the distal end side cylindrical portion 5C, the root side conical portion 5D, and the root side cylindrical portion 5E are respectively separate members, and are connected and assembled with bolts or the like.

[Copper layer]

Referring to FIG. 4, a copper layer 12 is fixed to the inner peripheral surface of the conductive member 5. The copper layer 12 is, for example, a copper plate, and a copper plating. The copper layer 12 is provided in the entire range of the conductive member 5 in the circumferential direction. Therefore, the copper layer 12 is ring-shaped. The copper layer 12 is opposed to the first permanent magnet 3 and the second permanent magnet 4 with a gap therebetween.

Referring to FIG. 2, the length of the copper layer 12 in the axial direction will not be particularly limited. However, at least a part of the copper layer 12 is disposed at a position opposing to the first permanent magnet 3 and the second permanent magnet 4. In other words, the copper layer 12 is disposed on a face of the conductive member 5 which is opposed to the first permanent magnet 3 and the second permanent magnet 4. As a result of this, eddy current is generated in the copper layer 12 as well as in the conductive member 5. Note that the copper layer 12 may be provided in some range of the conductive member 5 in the circumferential direction. In this case, the first permanent magnet 3 and the second permanent magnet 4 may be opposed to the copper layer 12, as well as to the conductive member 5. Moreover, even when the entire range of the first permanent magnet 3 and the second permanent magnet 4 is opposed to the copper layer 12, the conductive member 5 is opposed to the first permanent magnet 3 and the second permanent magnet 4 with the copper layer 12 being interposed therebetween. The copper layer may be made of copper alone, or a copper alloy. The relation between the thickness $H2$ of the copper layer 12 and the thickness $H1$ of first permanent magnet and the second permanent magnet will be described later.

[Ball nut]

The ball nut 6 includes a flange portion 6A and a cylindrical portion 6B. The flange portion 6A has a cylindrical shape. The flange portion 6A is provided between the end on the root side (the fixture 8b side) of the main cylinder 2A of the magnet holding member and the end on the distal end side (the fixture 8a side) of the flange fixing portion 21C of the root side sub-cylinder 2C, and is fixed to both of them. The cylindrical portion 6B is provided closer to the distal end side of the screw shaft 7 than the flange portion 6A, and extends from the surface on the distal end side of the flange portion 6A.

Referring to FIG. 1, the ball nut 6 having such a configuration is arranged inside the magnet holding member 2 and the conductive member 5. Since the ball nut 6 is fixed to the magnet holding member 2, when the ball nut 6 is rotated, the magnet holding member 2 also rotates. The type of the ball nut 6 is not particularly limited. As the ball nut 6, a known ball nut may be used. A threaded portion is formed on the inner peripheral surface of the ball nut 6. Note that, in FIG. 1, rendering of a part of the cylindrical portion 6B of the ball nut 6 is omitted so that the screw shaft 7 can be seen.

[Screw shaft]

The screw shaft 7 penetrates the ball nut 6 and meshes with the ball nut 6 via a ball. A threaded portion corresponding to the threaded portion of the ball nut 6 is formed on the outer peripheral surface of the screw shaft 7. The screw shaft 7 and the ball nut 6 constitute a ball screw. The ball screw converts the axial movement of the screw shaft 7 into the rotational movement of the ball nut 6. A fixture 8b is connected to the screw shaft 7. The fixture 8b integral with the screw shaft 7 is fixed to a building support surface or within the building. In the case where the eddy current damper 1 is installed, for example, in a seismic isolation layer lying between within the building and the building support surface, a fixture 8b integral with the screw shaft 7 is fixed within the building, and the fixture 8a integral with the conductive member 5 is fixed to the building support surface. In the case where the eddy current damper 1 is installed, for example, between arbitrary layers within a building, the fixture 8b integral with the screw shaft 7 is fixed to the upper beam side between the arbitrary layers, and the fixture 8a integral with the conductive member 5 is fixed to the lower beam side between arbitrary layers. Therefore, the screw shaft 7 is not rotatable around the axis.

Fixing of the fixture 8b integral with the screw shaft 7 and the fixture 8a integral with the conductive member 5 may be reversed from the aforementioned description. In other words, the fixture 8b integral with the screw shaft 7 may be fixed to the building support surface, and the fixture 8a integral with the conductive member 5 may be fixed within the building.

The screw shaft 7 can move back and forth along the axial direction inside the magnet holding member 2 and the conductive member 5. When kinetic energy is applied to the eddy current damper 1 due to vibration or the like, the screw shaft 7 moves in the axial direction. If the screw shaft 7 moves in the axial direction, the ball nut 6 rotates around the screw shaft by the action of ball screw. As the ball nut 6 rotates, the magnet holding member 2 is rotated. As a result, since the first permanent magnets 3 and the second permanent magnets 4, which are integral with the magnet holding member 2, rotate relative to the conductive member 5 and the copper layer 12, an eddy current is generated in the conductive member 5 and the copper layer 12. As a result, a damping force is generated in the eddy current damper 1, thereby damping vibration.

According to the eddy current damper 1 of the present embodiment, the ball nut 6 is arranged inside the conductive member 5 and the magnet holding member 2. Even if kinetic energy is applied to the eddy current damper 1 due to vibration or the like, and the screw shaft 7 integral with the fixture 8b moves in the axial direction, the ball nut 6 does not move in the axial direction. Therefore, it is not necessary to provide a movable range of the ball nut 6 in the eddy current damper 1. For that reason, it is possible to reduce the sizes of components such as the magnet holding member 2 and the conductive member 5. In this way, the eddy current damper 1 can be reduced in size, and thus weight reduction of the eddy current damper 1 can be realized. Further, since each component has a simple configuration, assembly of the eddy current damper 1 becomes easy. Further, the component cost and the production cost of the eddy current damper 1 will become inexpensive.

Further, since the ball nut 6 is arranged inside the conductive member 5 and the magnet holding member 2, dust becomes less likely to enter between the ball nut 6 and the screw shaft 7, and the screw shaft 7 can be smoothly moved over a long period of time. Further, arranging the ball nut 6 inside the conductive member 5 and the magnet holding member 2 allows reduction of a distance between the end on the distal end side (the fixture 8a side) of the fixture 8b and the end on the root side (the fixture 8b side) of the conductive member 5, thus allowing downsizing of the eddy current damper. In addition, since each component has a simple configuration, the eddy current damper 1 can be easily assembled. Moreover, the component cost and manufacturing cost of the eddy current damper 1 are reduced.

The conductive member 5 accommodates the first permanent magnets 3 and the second permanent magnets 4 thereinside. In other words, the length of the conductive member 5 in the axial direction of the screw shaft 7 is larger than the length of the first permanent magnets 3 (the second permanent magnets 4) in the axial direction of the screw shaft 7, and thus the volume of the conductive member 5 is large. When the volume of the conductive member 5 increases, the heat capacity of the conductive member 5 also increases. Therefore, the temperature rise of the conductive member 5 due to generation of eddy current is suppressed. When the temperature rise of the conductive member 5 is suppressed, the temperature rises of the first permanent magnets 3 and the second permanent magnets 4 due to radiant heat from the conductive member 5 will be suppressed, and demagnetization due to temperature rises of the first permanent magnets 3 and the second permanent magnets 4 will be suppressed.

Next, principles of generation of eddy current, and principles of generation of damping force due to eddy current will be described.

[Damping force due to eddy current]

FIG. 6 is a schematic diagram showing magnetic circuits of an eddy current damper. Referring to FIG. 6, the arrangement of magnetic poles of a first permanent magnet 3 is inverted from the arrangement of magnetic poles of adjacent second permanent magnets 4. Therefore, magnetic fluxes emitted from the N pole of a first permanent magnet 3 reach the S poles of the adjacent second permanent magnets 4. Magnetic fluxes emitted from the N poles of a second permanent magnet 4 reach S poles of the adjacent first permanent magnets 3. As a result, a magnetic circuit is formed within a first permanent magnet 3, a second permanent magnet 4, a copper layer 12, the conductive member 5, and the magnet holding member 2. Since the gap between the first and second permanent magnets 3, 4 and the copper layer 12 and the gap between the first and second permanent magnets 3, 4 and the conductive member 5 are sufficiently small, the copper layer 12 and the conductive member 5 are within a magnetic field.

When the magnet holding member 2 rotates (see the arrow in FIG. 6), the first permanent magnets 3 and the second permanent magnets 4 move with respect to the conductive member 5. Therefore, the magnetic fluxes passing through the copper layer 12 and the conductive member 5 change. In this way, eddy currents are generated in the copper layer 12 and the conductive member 5. When an eddy current is generated, a new magnetic flux (demagnetizing field) is generated. This new magnetic flux hinders relative rotation between the magnet holding member 2 (the first permanent magnets 3 and the second permanent magnets 4) and the conductive member 5. In the case of the present embodiment, the rotation of the magnet holding member 2 is hindered. When the rotation of the magnet holding member 2 is hindered, the rotation of the ball nut integral with the magnet holding member 2 is also hindered. When the rotation of the ball nut is hindered, the axial movement of the screw shaft is also hindered. This is the damping force of the eddy current damper.

According to the eddy current damper of the present embodiment, the arrangement of the magnetic poles of a first permanent magnet is inverted from the arrangement of the magnetic poles of a second permanent magnet adjacent to the first permanent magnet in the circumferential direction of the magnet holding member. Therefore, a magnetic field due to the first permanent magnet and the second permanent magnet is generated in the circumferential direction of the magnet holding member. Further, when first permanent magnets and second permanent magnets are arrayed in a plural number in the circumferential direction of the magnet holding member, the amount of magnetic flux that reaches the conductive member is increased. In this way, the eddy current generated in the conductive member is increased, and the damping force of the eddy current damper is increased. On the other hand, the kinetic energy applied to the eddy current damper is converted into thermal energy, thereby achieving damping force. That is, eddy current generated by kinetic energy such as vibration will cause the temperature of the conductive member to rise.

Next, suppression of excessive temperature rise of the conductive member, the first permanent magnet, and the second permanent magnet, according to the eddy current damper of the present embodiment will be described.

[Temperature rise suppression]

In an eddy current damper, heat is generated intensively in components (conductive member) in which eddy current is generated. As a result, the conductive member is likely to become high temperature. To generate eddy current, the conductive member is provided in the vicinity of the permanent magnet. When the conductive member becomes high temperature, the permanent magnet becomes high temperature as well due to radiant heat. When the permanent magnet becomes excessively high temperature, the permanent magnet will be demagnetized, thus eddy current to be generated will diminish. As a result, the damping force of the eddy current damper will deteriorate.

To suppress temperature rise of the conductive member, it is effective to reduce heat generation density in the vicinity of the surface of the conductive member which is opposed to the first permanent magnet and the second permanent magnet. To reduce the heat generation density of the conductive member, it is effective to decrease the thickness of the first permanent magnet and that of the second permanent magnet. This is because the amount of the magnetic flux that passes through the conductive member is decreased. However, simply decreasing the thickness of the first permanent magnet and that of the second permanent magnet will diminish the eddy current generated in the conductive member, thus deteriorating the damping force of the eddy current damper. Further, in general, if a braking apparatus which utilizes eddy current is used in a high rotational speed range of more than 1000 rpm, it is likely that distortion occurs in the magnetic field due to the effects of diamagnetic field caused by eddy current. When distortion occurs in the magnetic field, the damping force will deteriorate. To prevent this, in a braking apparatus which utilizes eddy current, a thick permanent magnet which is excellent in ensuring straightness of magnetic flux is used.

Accordingly, in the eddy current damper of the present embodiment, the thickness of the first permanent magnet and that of the second permanent magnet are decreased to suppress excessive temperature rise of the conductive member. On the other hand, by providing a copper layer on the surface of the conductive member, which is opposed to the first permanent magnet and the second permanent magnet, the damping force of the eddy current damper is ensured. Moreover, for ensuring the straightness of magnetic flux, there is no need of using a thick permanent magnet to ensure the straightness of magnetic flux, since the eddy current damper is used in low rotational speed range of several hundred rpm.

The present inventors have conducted numerical calculation to investigate optimal sizes of the first permanent magnet and the second permanent magnet, and the thickness of the copper layer for suppressing temperature rise of the conductive member.

[Table 1]

Table 1

| First permanent magnet thickness H1/R1 | 0.018, 0.023, 0.031, 0.046 (reference), 0.092 |
|---|---|
| First permanent magnet width W1/R1 | Determined according to the value of H1 while keeping (H1/R1)×(W1/R1) =0.038 as constant. |

(continued)

| First permanent magnet circumferential length L1/R1 | 0.16 |
|---|---|
| Copper layer thickness H2/R1 | 0.0, 0.0013, 0.0026, 0.0065 (reference) |

Table 1 shows the sizes of the first permanent magnet and the second permanent magnet and the thickness of the copper layer, which were used in the numerical calculation. The size and the properties of the first permanent magnet were the same as those of the second permanent magnet. Therefore, hereinafter, only the first permanent magnet will be referred to. Moreover, each dimension is nondimensionalized by the distance R1 from the central axis of the screw shaft to the center of gravity of the first permanent magnet (see FIG. 2). The thickness H1/R1 of the first permanent magnet included 5 patterns of 0.018, 0.023, 0.031, 0.046, and 0.092. In the present numerical calculation, the cross sectional area (H1/R1)×(W1/R1) taken by a plane along the axial direction of the screw shaft was kept at 0.038 as constant (see FIG. 2). Therefore, the length W1/R1 in the axial direction of the magnet holding member of the first permanent magnet was determined according to the value of H1/R1. The length of the copper layer in the axial direction of the conductive member was the same as the length W1/R1 of the first permanent magnet. The length L1/R1 in the circumferential direction of the magnet holding member of the first permanent magnet was constant at 0.16 (see FIG. 4). The thickness H2/R1 of the copper layer included 4 patterns of 0.0, 0.0013, 0.0026, and 0.0065. The copper layer was provided over the entire range of the conductive member in the circumferential direction. Moreover, the entire range of the face of the copper layer on the side opposing to the first permanent magnet was opposed to the first permanent magnet and the second permanent magnet.

An eddy current damper having H1/R1 = 0.046 and H2/R1 = 0.0065 is defined as a reference case. The reference case is designed in numerical calculation so as to have damping force and energy absorption performance, which are as the same level as, or higher than those of a general viscous damper.

[Table 2]

Table 2

| First permanent magnet residual magnetic flux density | 1.36 [T] |
|---|---|
| First permanent magnet coercive force | 938 [kA/m] |
| Copper layer conductivity | $5.935 \times 10^7$ [S/m] |

Table 2 shows properties of the first permanent magnet and the copper layer, which were used in the numerical calculation. The residual magnetic flux density of the first permanent magnet was 1.36 [T], and the coercive force was 938 [kA/m]. The conductivity of the copper layer was $5.935 \times 10^7$ [S/m].

Using the result of the numerical calculation, the performance of the eddy current damper was evaluated. As the evaluation method, an average energy absorption rate S and a heat input density Q were introduced. The average energy absorption rate S was calculated by the following Formula (1). The average energy absorption rate S is average absorption energy per unit time and is equivalent to an average amount of heat generation of the conductive member. The heat input density Q was calculated by the following Formula (2). The heat input density Q is a value obtained by dividing an average energy absorption rate S by an area of the face of the first permanent magnet opposing to the copper layer. That is, it corresponds to an average heat flux when the heat generation in the conductive member is supposed to be the heat input at a face of the conductive member opposing to the first permanent magnet. In Formula (1), ω means an angular velocity [rad/sec] of the eddy current damper, and ω max means a maximum value of the angular velocity of the eddy current damper and was 750 rpm. In Formula (1), N means a braking torque [N·m] at an angular velocity ω.

[Expression 1]

$$S = (1/\omega_{max}) \times \int_0^{\omega max} (N\omega)d\omega \qquad (1)$$

[Expression 2]

$$Q=S/(W1 \times L1) \qquad (2)$$

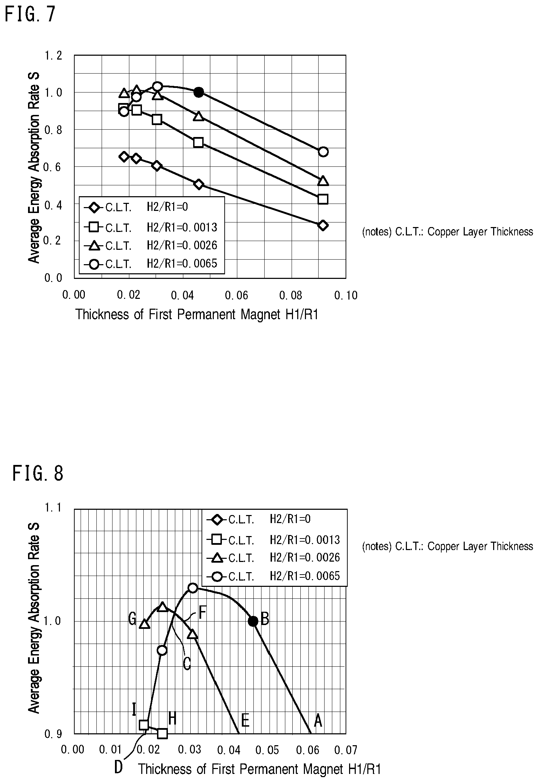

Evaluation results of the eddy current damper by the numerical calculation are shown in FIGS. 7 to 10. In FIGS. 7 to 10, the average energy absorption rate S and the heat input density Q are shown by normalizing them by the value of the calculation result of the reference case (H1/R1=0.046, H2/R1=0.0065, black circular mark).

FIG. 7 is a diagram showing relationship between the average energy absorption rate and the thickness of the first permanent magnet. Referring to FIG. 7, the ordinate shows the average energy absorption rate S and the abscissa shows the thickness H1/R1 of the first permanent magnet. In FIG. 7, a circular mark indicates a result of the thickness of the copper layer H2/R1=0.0065, a triangular mark indicates a result of H2/R1=0.0026, a square mark indicates a result of H2/R1=0.0013, and a rhombic mark indicates a result when the copper layer is absent.

FIG. 8 is a partially enlarged view of FIG. 7. Referring to FIG. 8 and looking at a calculation result (circular mark) when the thickness of the copper layer was H2/R1=0.0065, the average energy absorption rate S was 1.0 or more in a range between point C and point B, that is, provided that the thickness of the first permanent magnet H1/R1 was 0.025 or more and 0.046 or less. That is, provided that H1/R1 was 0.025 or more and 0.046 or less, an energy absorption rate not less than the average energy absorption rate of a reference case (black circular mark) was realized. Similarly, looking at the calculation result (triangular mark) of the thickness of the copper layer H2/R1=0.0026, the average energy absorption rate S was 1.0 or more, provided that the thickness of the first permanent magnet H1/R1 is in a range between point G and point F, that is, 0.018 or more and 0.028 or less.

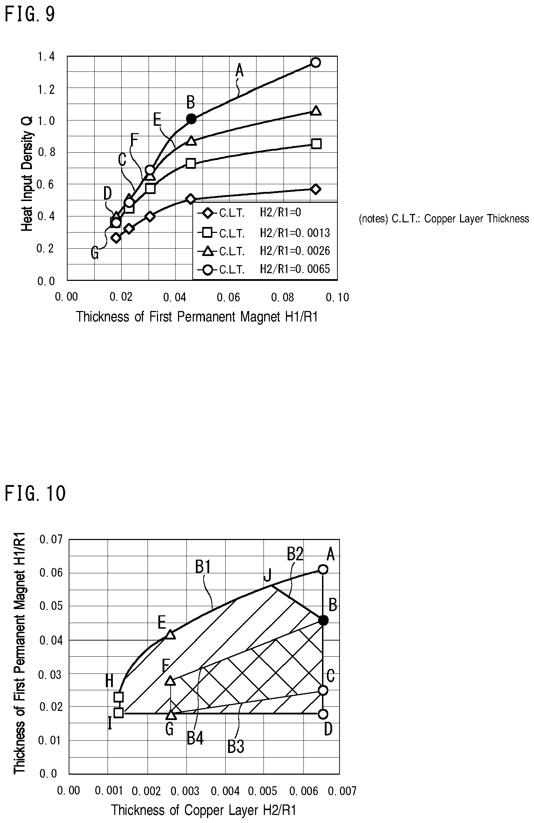

FIG. 9 is a diagram showing relationship between the heat input density and the thickness of the first permanent magnet. Referring to FIG. 9, the ordinate indicates heat input density Q and the abscissa indicates the thickness of the first permanent magnet H1/R1. In FIG. 9, a circular mark indicates a result of the thickness of the copper layer H2/R1=0.0065, a triangular mark indicates a result of H2/R1=0.0026, a square mark indicates a result of H2/R1=0.0013, and a rhombic mark indicates a result of a case in which the copper layer is absent.

Looking at the calculation result (circular mark) of the thickness of the copper layer H2/R1=0.0065, the heat input density Q was 1.0 or less provided that the thickness of the first permanent magnet H1/R1 is at or less than point B, that is, 0.046 or less. That is, provided that H1/R1 was 0.046 or less, a heat input density not more than the heat input density of the reference case (black circular mark) was realized. Similarly, looking at the calculation result (triangular mark) of the thickness of the copper layer H2/R1=0.0026, the heat input density Q was 1.0 or less provided that the thickness of the first permanent magnet H1/R1 was 0.075 or less.

From these results of the average energy absorption rate and the heat input density, a relationship between the thickness of the first permanent magnet H1/R1 and the thickness of the copper layer H2/R1, which allows realization of both a high average energy absorption rate S and a low heat input density Q, was investigated.

FIG. 10 is a diagram showing relationship between the thickness of the first permanent magnet and the thickness of the copper layer. Referring to FIG. 10, the ordinate indicates the thickness of the first permanent magnet H1/R1, and the abscissa indicates the thickness of the copper layer H2/R1. FIG. 10 is a diagram in which values obtained from FIGS. 8 and 9 are plotted.

The method for obtaining FIG. 10 will be described. First, a cross-hatched region surrounded by points B, C, G, and F in FIG. 10, that is, a region in which the average energy absorption rate S is 1.0 or more and the heat input density Q is 1.0 or less is determined.

Referring to FIG. 8, when the thickness of the copper layer H2/R1 = 0.0065 (circular mark), a range in which the average energy absorption rate S is 1.0 or more is between point B and point C. Moreover, when the thickness of the copper layer H2/R1 = 0.0026 (triangular mark), a range in which the average energy absorption rate S is 1.0 or more is between point F and point G. Looking at these points B, C, F, and G in FIG. 9, the heat input density Q is 1.0 or less at any of points B, C, F, and G. Therefore, plotting points B, C, F, and G onto FIG. 10 will result in that the average energy absorption rate S is 1.0 or less, and the heat input density Q is 1.0 or less in a region surrounded by points B, C, F, and G (cross-hatched region).

Next, a single-hatched region surrounded by points B, D, I, H, E, and J in FIG. 10, that is, a region in which the average energy absorption rate S is 0.9 or more, and less than 1.0, and the heat input density Q is 1.0 or less is determined.

Referring to FIG. 8, when the thickness of the copper layer H2/R1 = 0.0065 (circular mark), a region in which the average energy absorption rate S is 0.9 or more is between point A and point D. Moreover, when the thickness of the copper layer H2/R1 = 0.0026 (triangular mark), a region in which the average energy absorption rate S is 0.9 or more is between point E and point G. Note that the thickness of the permanent magnet H1/R1 is less than 0.018, the thickness of the permanent magnet is too small and its actual use is inconceivable so that investigation is omitted. Looking at these points A, D, E, and G in FIG. 9, the heat input density Q is 1.0 or less at any of points D, E, and G. On the other hand, the heat input density Q is more than 1.0 at point A. Such a region in which the heat input density Q is more than 1.0 is excluded from the single-hatched region. Similarly, the same is determined for a case in which the thickness of the copper layer H2/R1 = 0.0013. Then, the single-hatched region surrounded by points B, D, I, H, E, and J is determined in FIG. 10.

As described so far, in summary, it is found that in a range in which the thickness of the first permanent magnet H1/R1 is 0.018 or more and 0.060 or less, and the thickness of the copper layer H2/R1 is 0.0013 or more and 0.0065 or less, the average energy absorption rate S is high and the heat input density Q is low, and therefore such a range is suitable for an eddy current damper. Note that this region will include regions other than the single-hatched region and the cross-hatched region in FIG. 10. That is, when the average energy absorption rate S is less than 0.9, a case in which the heat input density Q is more than 1.0 is included. However, the single-hatched region and the cross-hatched region merely indicate a range in which remarkable effects can be obtained compared with conventional viscous dampers and the like. Therefore, even in a region other than the single-hatched region and the cross-hatched region, there will be no problem in using as an eddy current damper provided that the thickness of the first permanent magnet H1/R1 is 0.018 or more and 0.060 or less, and the thickness of the copper layer H2/R1 is 0.0013 or more and 0.0065 or less.

Further, in the eddy current damper according to the first embodiment, the conductive member 5 is arranged outside the magnet holding member 2. In other words, the conductive member 5 is arranged on the outermost side, and is in contact with the outside air. In this way, the conductive member 5 is cooled by the outside air. Therefore, the temperature rise of the conductive member 5 can be suppressed. As a result, the temperature rises of the first permanent magnets and the second permanent magnets can be suppressed.

The upper limit of the thickness of the first permanent magnet H1/R1 is preferably the value of the smaller one of $H1/R1=0.023+(0.28\times H2/R1-0.0036)^{0.5}$ and $H1/R1=-7.7\times H2/R1+0.096$. In short, this means that the thickness of the first permanent magnet H1/R1 is within the range of the single-hatched region in FIG. 10. Where, $H1/R1=0.023+(0.28\times H2/R1-0.0036)^{0.5}$ means boundary B1 in FIG. 10, and $H1/R1=-7.7\times H2/R1+0.096$ means boundary B2 in FIG. 10. If the upper limit of the thickness of the first permanent magnet H1/R1 is the value of the smaller one of $H1/R1=0.023+(0.28\times H2/R1-0.0036)^{0.5}$ and $H1/R1=-7.7\times H2/R1+0.096$, the average energy absorption rate S will be 0.9 or more, and the heat input density Q will be 1.0 or less. For that reason, it is possible to ensure enough damping force as the eddy current damper, and suppress temperature rise of the conductive member, the first permanent magnet, and the second permanent magnet.

Further preferably, the thickness of the first permanent magnet H1/R1 and the thickness of the copper layer H2/R1 are $1.8\times H2/R1+0.013 \leq H1/R1 \leq 4.6\times H2/R1+0.016$, and $0.0026 \leq H2/R1 \leq 0.0065$. This means the cross-hatched region in FIG. 10. $1.8\times H2/R1+0.013$ means boundary B3 in FIG. 10, and $4.6\times H2/R1+0.016$ means boundary B4 in FIG. 10. That is, provided that the thickness of the first permanent magnet H1/R1 and the thickness of the copper layer H2/R1 are within these ranges, the average energy absorption rate S will be 1.0 or more, and the heat input density Q will be 1.0 or less. For that reason, it is possible to ensure enough damping force as the eddy current damper, and suppress temperature rise of the conductive member, the first permanent magnet, and the second permanent magnet.

Next, preferable aspects of the eddy current damper of the present embodiment and other embodiments will be described.

[Arrangement of magnetic poles]

In the above description, a case in which arrangement of the magnetic poles of the first permanent magnets and the second permanent magnets is in the radial direction of the magnet holding member has been described. However, the arrangement of the magnetic poles of the first permanent magnets and the second permanent magnets is not limited to this.

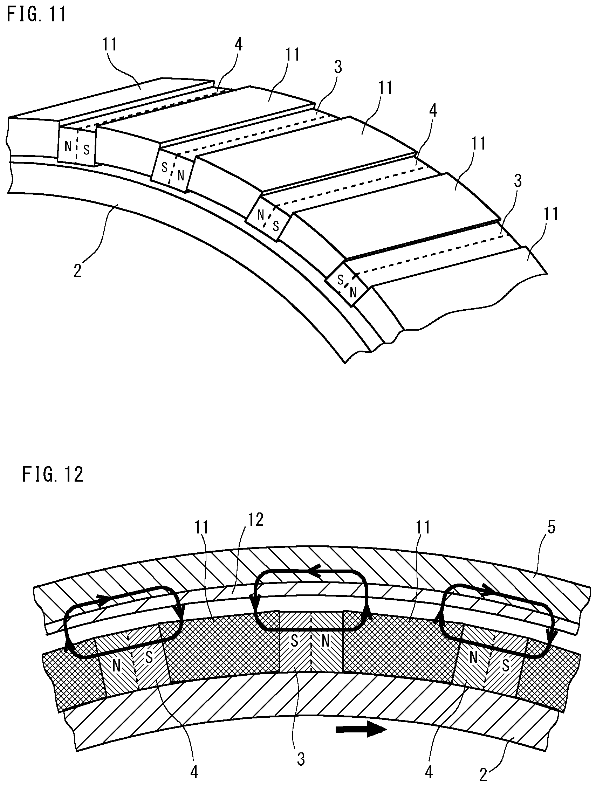

FIG. 11 is a perspective view showing the first permanent magnets and the second permanent magnets, in which the magnetic poles are arranged in the circumferential direction. Referring to FIG. 11, arrangements of the magnetic poles of first permanent magnets 3 and second permanent magnets 4 are along the circumferential direction of the magnet holding member 2. Even in this case, the arrangement of the magnetic poles of a first permanent magnet 3 is inverted from the arrangement of the magnetic poles of a second permanent magnet 4. A ferromagnetic pole piece 11 is provided between a first permanent magnet 3 and a second permanent magnet 4.

FIG. 12 is a schematic diagram showing magnetic circuits of the eddy current damper of FIG. 11. Referring to FIG. 12, a magnetic flux emitted from an N pole of a first permanent magnet 3 passes through a pole piece 11 and reaches an S pole of the first permanent magnet 3. The same applies to the second permanent magnets 4. As a result, a magnetic circuit is formed within a first permanent magnet 3, a second permanent magnet 4, a pole piece 11, and the conductive member 5. In this way, a damping force is obtained in the eddy current damper 1 in the same as described above.

[Arrangement of permanent magnets in axial direction]

In order to increase the damping force of the eddy current damper 1, the eddy current generated in the conductive member may be increased. One way to generate a large eddy current is to increase the amount of magnetic flux emanating from a first permanent magnet and a second permanent magnet. In other words, the sizes of the first permanent magnet and the second permanent magnet may be increased. However, when the first permanent magnet and the second permanent magnet are large in size, they are high in cost and attaching them to the magnet holding member is not easy.

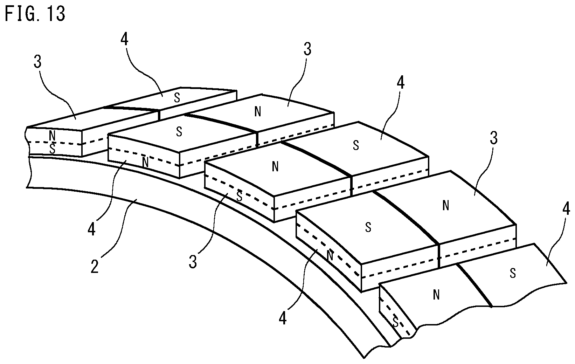

FIG. 13 is a perspective view showing first permanent magnets and second permanent magnets, which are arranged in a plurality of rows in the axial direction. Referring to FIG. 13, first permanent magnets 3 and second permanent magnets 4 may be arranged in a plurality of rows in the axial direction of one magnet holding member 2. In this way, each size of one first permanent magnet 3 and one second permanent magnet 4 may be small. On the other hand, the total size of the plurality of first permanent magnets 3 and second permanent magnets 4 which are attached to the magnet holding member 2 is large. Therefore, the costs of the first permanent magnet 3 and the second permanent magnet 4 can be kept low. Moreover, attaching the first permanent magnet 3 and the second permanent magnet 4 to the magnet holding member 2 is also easy.

Arrangement of the first permanent magnets 3 and the second permanent magnets 4, which are arranged in the axial direction, in the circumferential direction of the magnet holding member 2 is the same as described above. In other words, the first permanent magnets 3 and the second permanent magnets 4 are alternately arranged along the circumferential direction of the magnet holding member 2.

From the viewpoint of increasing the damping force of the eddy current damper 1, the first permanent magnet 3 is preferably adjacent to the second permanent magnet 4 in the axial direction of the magnet holding member 2. In this case, the magnetic circuit is generated not only in the circumferential direction of the magnet holding member 2 but also in the axial direction thereof. Therefore, the eddy current generated in the conductive member is increased. As a result, the damping force of the eddy current damper increases.

However, in the axial direction of the magnet holding member 2, the arrangement of the first permanent magnet 3 and the second permanent magnet 4 is not particularly limited. In other words, in the axial direction of the magnet holding member 2, a first permanent magnet 3 may be arranged next to a first permanent magnet 3 or may be arranged next to a second permanent magnet 4.

In the first embodiment described above, description has been made on a case in which the magnet holding member is arranged inside the conductive member; the first permanent magnets and the second permanent magnets are attached to the outer peripheral surface of the magnet holding member; and further the magnet holding member is rotatable. However, the eddy current damper of the present embodiment will not be limited to this.

[Second embodiment]

In an eddy current damper according to a second embodiment, a magnet holding member is arranged outside a conductive member and is not rotatable. Eddy currents are generated as a result of rotation of the inner conductive member. Note that, in the eddy current damper of the second embodiment, the arrangement relationship between the magnet holding member and the conductive member is reversed from that of the first embodiment. However, the shape of the magnet holding member of the second embodiment is the same as that of the conductive member of the first embodiment, and the shape of the conductive member of the second embodiment is the same as that of the magnet holding member of the first embodiment. Therefore, in the second embodiment, detailed description on the shapes of the magnet holding member and the conductive member will be omitted.

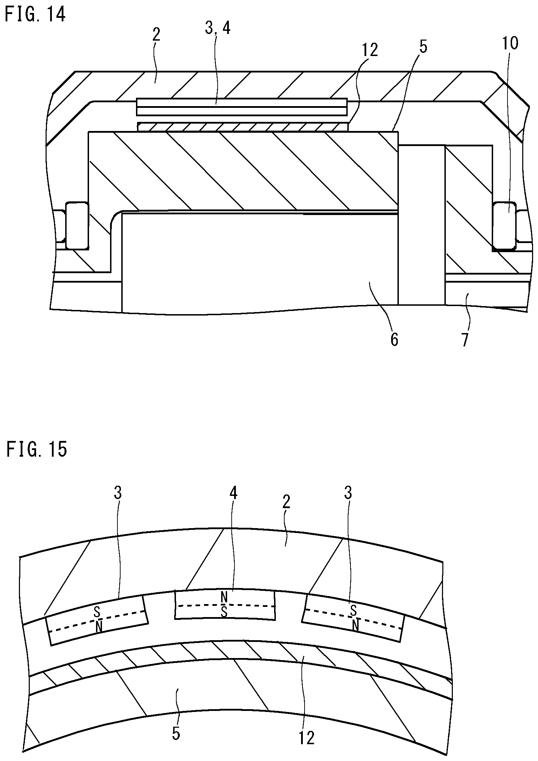

FIG. 14 is a sectional view taken in a plane along the axial direction of the eddy current damper according to the second embodiment. FIG. 15 is a sectional view taken in a plane perpendicular to the axial direction of the eddy current damper according to the second embodiment. With reference to FIGS. 14 and 15, the magnet holding member 2 can accommodate a conductive member 5, a ball nut 6, a screw shaft 7, and a copper layer 12. The first permanent magnets 3 and the second permanent magnets 4 are attached to the inner peripheral surface of the magnet holding member 2. The copper layer 12 is fixed to the outer peripheral surface of the conductive member 5. Therefore, the outer peripheral surface of the conductive member 5 and the copper layer 12 are opposed to the first permanent magnets 3 and the second permanent magnets 4 with a gap therebetween.

In the second embodiment, the fixture 8a shown in FIG. 1 is connected to the magnet holding member. Therefore, the magnet holding member 2 is not rotatable around the screw shaft 7. On the other hand, the ball nut 6 is connected to the conductive member 5. Accordingly, when the ball nut 6 is rotated, the conductive member 5 and the copper layer 12 rotate. Even in such a configuration, as described above, since the first permanent magnets 3 and the second permanent magnets 4, which are integral with the magnet holding member 2, are rotated relative to the conductive member 5 and the copper layer 12, eddy currents are generated in the conductive member 5 and the copper layer 12. As a result, a damping force is generated in the eddy current damper, enabling to dampen vibration.

Further, in the eddy current damper according to the second embodiment, the magnet holding member 2 is arranged outside the conductive member 5. In other words, the magnet holding member 2 is arranged on the outermost side and comes into contact with the outside air. In this way, the magnet holding member 2 is cooled by the outside air. Therefore, the first permanent magnets and the second permanent magnets can be cooled through the magnet holding member 2. As a result, the temperature rises of the first permanent magnets and the second permanent magnets can be suppressed.

[Third embodiment]

In an eddy current damper of a third embodiment, the magnet holding member is arranged inside the conductive member, and is not rotatable. An eddy current is generated as a result of rotation of the conductive member in the outside.

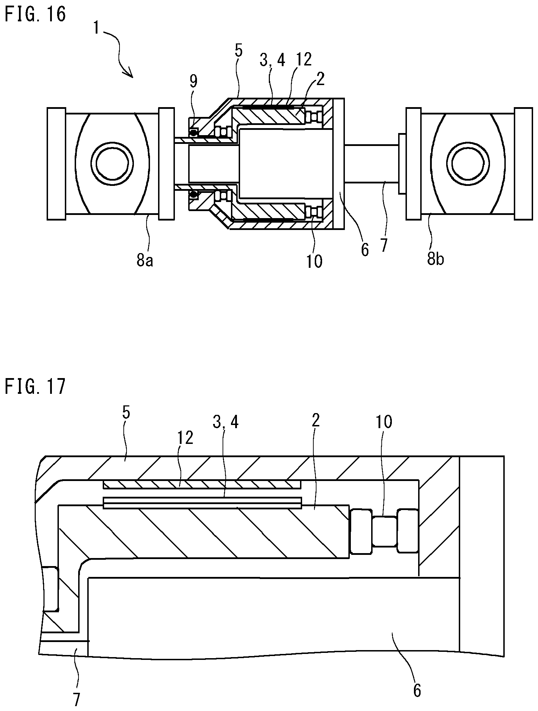

FIG. 16 is a sectional view taken in a plane along the axial direction of an eddy current damper of a third embodiment. FIG. 17 is a partially enlarged view of FIG. 16. Referring to FIGS. 16 and 17, a conductive member 5 can accommodate a magnet holding member 2, a ball nut 6, a screw shaft 7, and a copper layer 12. The first permanent magnets 3 and the second permanent magnets 4 are attached to the outer peripheral surface of the magnet holding member 2. The copper layer 12 is fixed to the inner peripheral surface of the conductive member 5. Therefore, the inner peripheral surface of the conductive member 5 and the copper layer 12 are opposed to the first permanent magnets 3 and the second permanent magnets 4 with a gap therebetween.

The fixture 8a is connected to the magnet holding member. Therefore, the magnet holding member 2 is not rotatable around the screw shaft 7. On the other hand, the ball nut 6 is connected to the conductive member 5. Accordingly, when the ball nut 6 is rotated, the conductive member 5 and the copper layer 12 rotate. Even in such a configuration, since the first permanent magnets 3 and the second permanent magnets 4, which are integral with the magnet holding member 2, rotate relative to the conductive member 5 and the copper layer 12 as described above, eddy currents are generated in the conductive member 5 and the copper layer 12. As a result, a damping force is generated in the eddy current damper, thereby enabling to dampen vibration.

Further, in the eddy current damper of the third embodiment, the conductive member 5 is arranged outside the magnet holding member 2. In other words, the conductive member 5 is arranged on the outermost side, and is in contact with the outside air. Further, the conductive member 5 is rotatable around the screw shaft 7. In this way, the rotating conductive member 5 is efficiently cooled by the outside air. Therefore, the temperature rise of the conductive member 5 can be suppressed. As a result, the temperature rises of the first permanent magnets and the second permanent magnets can be suppressed.

[Fourth embodiment]

In an eddy current damper of a fourth embodiment, the conductive member is arranged inside the magnet holding member, and is not rotatable. Eddy currents are generated as a result of rotation of the magnet holding member in the outside.

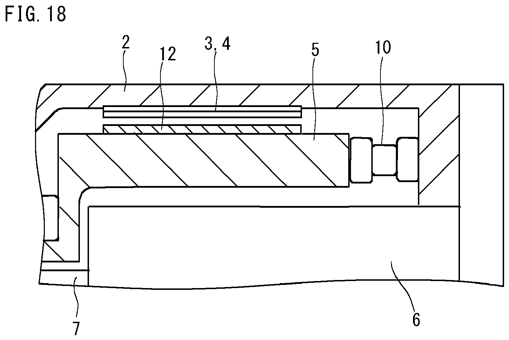

FIG. 18 is a sectional view taken in a plane along the axial direction of the eddy current damper of the fourth embodiment. Referring to FIG. 18, a magnet holding member 2 can accommodate a conductive member 5, a ball nut 6, a screw shaft 7, and a copper layer 12. First permanent magnets 3 and second permanent magnets 4 are attached to the inner peripheral surface of the magnet holding member 2. The copper layer 12 is fixed to the outer peripheral surface of the conductive member 5. Therefore, the outer peripheral surface of the conductive member 5 and the copper layer 12 are opposed to the first permanent magnets 3 and the second permanent magnets 4 with a gap therebetween.

The fixture 8a shown in FIG. 1 is connected to the conductive member. Therefore, the conductive member 5 is not rotatable around the screw shaft 7. On the other hand, the ball nut 6 is fixed to the magnet holding member 2. Therefore, when the ball nut 6 is rotated, the magnet holding member 2 rotates. Even in such a configuration, since the first permanent magnets 3 and the second permanent magnets 4, which are integral with the magnet holding member 2, rotate relative to the conductive member 5 and the copper layer 12 as described above, eddy currents are generated in the conductive member 5 and the copper layer 12. As a result, a damping force is generated in the eddy current damper 1, thereby enabling to dampen vibration.

Further, in the eddy current damper according to the fourth embodiment, the magnet holding member 2 is arranged outside the conductive member 5. In other words, the magnet holding member 2 is arranged on the outermost side, and is in contact with the outside air. Further, the magnet holding member 2 is rotatable around the screw shaft 7. In this way, the rotating magnet holding member 2 is efficiently cooled by the outside air. Therefore, the first permanent magnets and the second permanent magnets can be cooled through the magnet holding member 2. As a result, the temperature rises of the first permanent magnets 3 and the second permanent magnets 4 can be suppressed.

So far, the eddy current damper of the present embodiment has been described. Since an eddy current is generated by the change of the magnetic flux passing through the conductive member 5, the first permanent magnet 3 and the second permanent magnet 4 may be rotated relative to the conductive member 5. In addition, as long as the conductive member 5 exists in the magnetic field generated by the first permanent magnet 3 and the second permanent magnet 4, the positional relationship between the conductive member and the magnet holding member is not particularly limited.

In addition, it goes without saying that the present invention is not limited to the above described embodiments, and various modifications can be made without departing from the spirit of the present invention.

INDUSTRIAL APPLICABILITY

The eddy current damper of the present invention is useful for vibration control devices and seismic isolation devices of buildings.

REFERENCE SIGNS LIST

1:          Eddy current damper
2:          Magnet holding member
3:          First permanent magnet
4:          Second permanent magnet
5:          Conductive member
6:          Ball nut
7:          Screw shaft
8a, 8b:     Fixture
9:          Radial bearing
10:         Thrust bearing
11:         Pole Piece
12:         Copper layer

**Claims**

1. An eddy current damper, comprising:

   a cylindrical magnet holding member;
   a first permanent magnet having a thickness H1 and fixed to the magnet holding member;
   a second permanent magnet having a thickness H1, the second permanent magnet being adjacent to the first permanent magnet with a gap therebetween in a circumferential direction of the magnet holding member and being fixed to the magnet holding member, wherein arrangement of magnetic poles is inverted between the second permanent magnet and the first permanent magnet;
   a cylindrical conductive member having conductivity and being opposed to the first permanent magnet and the second permanent magnet with a gap therebetween;
   a ball nut arranged inside the magnet holding member and the conductive member, and being fixed to the magnet holding member or the conductive member;
   a screw shaft movable in a central axis direction and meshing with the ball nut; and
   a copper layer having a thickness H2, the copper layer being fixed to the conductive member, and being opposed to the first permanent magnet and the second permanent magnet with a gap therebetween, wherein
   the thickness H1 and the thickness H2 satisfy, with respect to a distance R1 between the central axis of the screw shaft and a center of gravity of the first permanent magnet:

$$0.018 \le H1/R1 \le 0.060,$$

   and

$$0.0013 \le H2/R1 \le 0.0065.$$

2. The eddy current damper according to claim 1, wherein

an upper limit of the thickness H1 satisfies, with respect to the distance R1:

$$H1/R1 = 0.023+(0.28\times H2/R1-0.0036)^{0.5},$$

or

$$H1/R1 = -7.7\times H2/R1+0.096,$$

whichever is smaller.

3. The eddy current damper according to claim 1, wherein
the thickness H1 and the thickness H2 satisfy, with respect to the distance R1:

$$1.8\times H2/R1+0.013 \leq H1/R1 \leq 4.6\times H2/R1+0.016,$$

and

$$0.0026 \leq H2/R1 \leq 0.0065.$$

4. The eddy current damper according to any one of claims 1 to 3, further comprising:

a distal end side bearing attached to the magnet holding member to support the conductive member or attached to the conductive member to support the magnet holding member, at a position closer to the distal end side of the screw shaft than the first permanent magnet and the second permanent magnet; and
a root side bearing attached to the magnet holding member to support the conductive member or attached to the conductive member to support the magnet holding member, at a position closer to the root side of the screw shaft than the first permanent magnet and the second permanent magnet.

FIG. 1

FIG. 2

FIG. 3

FIG. 4

FIG. 5

FIG. 6

FIG. 7

(notes) C.L.T.: Copper Layer Thickness

FIG. 8

(notes) C.L.T.: Copper Layer Thickness

FIG. 9

(notes) C.L.T.: Copper Layer Thickness

FIG. 10

FIG. 11

FIG. 12

FIG. 13

FIG. 14

FIG. 15

FIG. 16

FIG. 17

FIG. 18

**EP 3 719 346 A1**

## INTERNATIONAL SEARCH REPORT

| International application No. |
| --- |
| PCT/JP2018/040854 |

| A. CLASSIFICATION OF SUBJECT MATTER |
| --- |
| Int.Cl. F16F15/03(2006.01)i, E04H9/02(2006.01)i, F16F6/00(2006.01)i |

According to International Patent Classification (IPC) or to both national classification and IPC

| B. FIELDS SEARCHED |
| --- |

| Minimum documentation searched (classification system followed by classification symbols) |
| --- |
| Int.Cl. F16F15/03, E04H9/02, F16F6/00 |

| Documentation searched other than minimum documentation to the extent that such documents are included in the fields searched |
| --- |
| Published examined utility model applications of Japan     1922-1996 |
| Published unexamined utility model applications of Japan     1971-2019 |
| Registered utility model specifications of Japan     1996-2019 |
| Published registered utility model applications of Japan     1994-2019 |

| Electronic data base consulted during the international search (name of data base and, where practicable, search terms used) |
| --- |

| C. DOCUMENTS CONSIDERED TO BE RELEVANT |
| --- |

| Category* | Citation of document, with indication, where appropriate, of the relevant passages | Relevant to claim No. |
| --- | --- | --- |
| A | JP 2017-511867 A (CHEN, Z. Q.) 27 April 2017, paragraphs [0029]-[0035], fig. 1, 2<br>& US 2017/0294828 A1, paragraphs [0029]-[0035], fig. 1, 2 & WO 2016/041116 A1 & EP 3196505 A1 | 1-4 |
| A | WO 2015/139404 A1 (CHEN, Z. Q.) 24 September 2015, page 4, line 13 to page 5, line 22, fig. 1-6<br>& CN 103821861 A | 1-4 |
| A | US 2015/0167769 A1 (CHI HUA FITNESS CO., LTD.) 18 June 2015, paragraph [0034], fig. 4A<br>(Family: none) | 1-4 |

☒ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 04.01.2019 | 15.01.2019 |

| Name and mailing address of the ISA/ | Authorized officer |
| --- | --- |
| Japan Patent Office<br>3-4-3, Kasumigaseki, Chiyoda-ku,<br>Tokyo 100-8915, Japan | Telephone No. |

Form PCT/ISA/210 (second sheet) (January 2015)

29

**EP 3 719 346 A1**

INTERNATIONAL SEARCH REPORT

| | International application No. |
|---|---|
| | PCT/JP2018/040854 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2010-159837 A (JTEKT CORPORATION) 22 July 2010, paragraphs [0015]-[0028], fig. 1, 2 (Family: none) | 1-4 |

Form PCT/ISA/210 (continuation of second sheet) (January 2015)

**EP 3 719 346 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5086496 A
- JP 9177880 A
- JP 2000320607 A